# EUROPÄISCHE PATENTSCHRIFT

(11) **EP 2 436 949 B1**
(45) Veröffentlichungstag und Bekanntmachung des Hinweises auf die Patenterteilung: **31.07.2013**
(21) Anmeldenummer: 10182293.0
(22) Anmeldetag: 29.09.2010
(51) Int. Cl.: F16H 1/28, G01L 3/14

(54) **Planetengetriebe für eine Windkraftanlage oder industrielle Anwendungen**
Planetary gear for a wind power system or industrial applications
Engrenage épicycloïdal pour une éolienne ou des applications industrielles

(43) Veröffentlichungstag der Anmeldung: 04.04.2012
(73) Patentinhaber: Siemens Aktiengesellschaft, 80333 München (DE)
(72) Erfinder: Kücükyavuz, Ali Kemal, 59192, Bergkamen (DE); Pötter, Friedhelm, 59192, Bergkamen (DE)

(56) Entgegenhaltungen:
- DE-A1- 2 817 307
- DE-A1- 3 738 607
- GB-A- 2 141 199
- JP-A- 10 062 272
- JP-A- 11 248 559
- JP-A- 62 083 630
- US-A- 5 906 432

## Beschreibung

An Getriebe umfassende Antriebssysteme wird in industriellen Verarbeitungs- und Fertigungsprozessen eine breite Palette von komplexen Anforderungen gestellt, beispielsweise zuverlässiger Betrieb über eine lange Nutzungsdauer bei minimalem Wartungsaufwand. Industrielle Verarbeitungs- und Fertigungsprozesse beeinträchtigende Ausfälle eines Antriebssystems können beispielsweise aufgrund von Anlagenstillstandszeiten zu hohen finanziellen Schäden führen.

Insbesondere in Windkraftanlagen sind Getriebe während ihrer Einsatzdauer einer dynamischen Lastfolge von Dreh- und Biegemomenten sowie axialen und radialen Kräften ausgesetzt. Zur Auslegung von Getrieben werden durch Anlagenbetreiber bzw. -hersteller definierte Lastkollektive verwendet. Probleme können entstehen, wenn diese Lastkollektive nicht im Betrieb auftretenden tatsächlichen Belastungen entsprechen. Um Überlastungssituationen zu erkennen und zu vermeiden, können in einem Getriebe Drehmomentsensoren vorgesehen werden.

Eine Drehmomentmessung an einer Welle basiert vielfach darauf, daß eine Welle Torsionsfedereigenschaften aufweist und durch Drehmomenteinfluß eine Verdrehung erfährt. Diese Verdrehung kann beispielsweise mittels Dehnmeßstreifen, optischer Sensoren oder magnetoelastischer Sensoren ermittelt werden. Bei bekannter Torsionssteifigkeit der Welle kann aus der ermittelten Verdrehung das auf die Welle einwirkende Drehmoment abgeleitet werden.

Optische Sensoren können axial beabstandet an einer Welle angeordnete Schlitzscheiben umfassen, deren relative Verdrehung erfaßt wird. Eine solche Meßvorrichtung ist beispielsweise in DE 197 45 823 A1 beschrieben. Alternativ dazu können auf einer Welle auch optische Gitter vorgesehen sein, deren Verzerrung unter Drehmomenteinfluß ermittelt wird. Bei magnetoelastischen Sensoren werden ferromagnetische Werkstoffe verwendet, deren Permeabilität sich belastungsabhängig ändert.

Aus DE 28 15 463 A1 ist bekannt, an einer Welle in einem axialen Abstand zwei elektromagnetische Impulsgeber anzuordnen, denen jeweils ein elektromagnetischer Fühler zugeordnet ist. Mit den Fühlern und einem nachgeschalteten Komparator können drehmomentbedingte Phasenverschiebungen zwischen durch die Impulsgeber erzeugten Signalen ermittelt werden.

In WO 2000/08434 A1 ist eine Sensoranordnung zur kombinierten Erfassung von Drehwinkel und Drehmoment an einem rotierenden mechanischen Bauteil beschrieben, bei der Winkelgeber und Sensoren derart angeordnet sind, daß eine Torsion des Bauteils als relative Winkeländerung zwischen den Winkelgebern erfaßbar ist. Zwei axial beabstandet mit dem mechanischen Bauteil verbundene Zahnräder weisen eine identische Zähnzahl auf und kämmen jeweils mit einem als Winkelgeber verwendeten Zahnrad. Die als Winkelgeber verwendeten Zahnräder weisen ebenfalls eine identische Zähnezahl auf. Zur genaueren Umrechung des Drehwinkels des Bauteils ist noch ein weiteres Zahnrad vorgesehen, das eine andere Zähnezahl als die als Winkelgeber verwendeten Zahnräder aufweist. Dieses weitere Zahnrad steht mit einem der Zahnräder in Eingriff, die mit dem Bauteil verbunden sind. Die aus WO 2000/08434 A1 bekannte Sensoranordnung beansprucht verhältnismäßig viel Platz und läßt sich nicht ohne weiteres in bestehende Getriebekonstruktionen integrieren. Zudem sind zur Integration einer derartigen Sensoranordnung in ein Getriebe üblicherweise lange Leitungszuführungen zum Installationsort für die Sensoren erforderlich. Dabei ist sicherzustellen, dass die Leitungszuführungen in geeigneter Weise insbesondere gegenüber mechanischen, thermischen und elektromagnetischen Belastungen geschützt sind.

GB 2 141 199 A beschreibt ein Getriebe mit Überlastsicherung. Das Getriebe weist zur Drehmomentenmessung mindestens ein Messglied auf, welches vorzugsweise aus einem druckbelasteten Messbolzen besteht, der mit Dehnungsmessstreifen versehen ist. Das Messglied ist einer Planetengetriebestufe zugeordnet und hat zugleich die Funktion eines Halteorgans, welches den im Betrieb feststehenden Getriebeteil der Planetengetriebestufe, vorzugsweise deren Hohlrad, gegen Drehung festlegt. Das Messglied stützt sich gegen das Getriebegehäuse ab und ist zweckmäßig leicht auswechselbar in einer Gehäusekammer angeordnet.

JP 10-062272 A beschreibt einen Drehmomentsensor für ein Planetengetriebe. Dabei sind Dehnungsmessstreifen auf der Außenseite eines flexiblen Elements eines Kraftaufnehmers befestigt, welcher in einem für den Kraftaufnehmer vorgesehenen Gehäuseteil angeordnet ist. Beim Einwirken eines Drehmoments auf ein Hohlrad des Planetengetriebes deformiert sich das flexible Element. Zum Schutz des Kraftaufnehmers wird diese Deformation durch einen Anschlag begrenzt.

Die gatlungsgemäβe DE 37 38 607 A1 beschreibt ein Planetengetriebe, welches eine Antriebswelle mit Sonnenrad, wenigstens ein in das Sonnenrad eingreifendes Planetenrad, ein mit dem Planetenrad kämmendes, ortsfestes Hohlrad, einen das Planetenrad tragenden Planetenradträger und eine mit dem Planetenradträger verbundene Abtriebswelle umfasst. Das Planetenrad und das Hohlrad bestehen jeweils aus zwei separaten, zueinander koaxialen Teilen, wobei ein Teil des Hohlrades relativ zum anderen Teil des Hohlrades verdrehbar und feststellbar ist.

In der Patentschrift US 5 906 432 A ist ein Teigmischer zur Verwendung in einem Bäckereilabor beschrieben. Der Mischer umfasst einen aufrecht angeordneten Mixer, eine Schüssel mit einem aufrecht stehenden Mittelstift und ein Paar Knethaken, ungefähr in Doppelhelix-Form. Im Betrieb dreht der Mixer die Knethaken um ihre Achsen und exzentrisch zum Mittelstift, um ein effizientes Kneten und eine rasche Teigentwicklung zu gewährleisten. Eine bevorzugte Ausgestaltung umfasst auch einen Dehnungsmessstreifen zur Überwachung des auf die Knethaken wirkenden Drehmoments und, auf einem PC-Monitor, eine Anzeige eines Graphen des Drehmoments über der Zeit in Bezug auf eine Spezifikationskurve zur Überwachung der Teigentwicklung.

Der vorliegenden Erfindung liegt die Aufgabe zugrunde, ein Planetengetriebe mit integrierter Drehmomentmessvorrichtung anzugeben, die sich leicht montieren und demontieren lässt sowie eine zuverlässige und störungsunempfindliche Messung ermöglicht.

Diese Aufgabe wird erfindungsgemäß durch ein Planetengetriebe mit den in Anspruch 1 angegebenen Merkmalen gelöst. Vorteilhafte Weiterbildungen sind in den abhängigen Ansprüchen angegeben.

Das erfindungsgemäße Planetengetriebe für eine Windkraftanlage oder industrielle Anwendungen umfasst ein Sonnenrad, ein Hohlrad und mehrere Planetenräder. Die Planetenräder sind in einem Planetenträger gelagert und stehen sowohl mit dem Sonnenrad als auch mit dem Hohlrad in Eingriff. Das Sonnenrad, das Hohlrad und die Planetenräder sind durch ein Getriebegehäuse umfasst. Das Hohlrad ist mittels zumindest eines Befestigungsbolzens am Getriebegehäuse montiert. Der zumindest eine Befestigungsbolzen umfasst eine integrierte Längenänderungs- und/oder Kraftmesseinrichtung. Auf diese Weise kann ein auf ein Hohlrad eines Planetengetriebes einwirkendes Drehmoment zuverlässig auf Grundlage einer auf einen Hohlrad-Befestigungsbolzen einwirkenden Scherkraft ermittelt werden.

Da ein Hohlrad-Befestigungsbolzen üblicherweise eine gut zugängliche Einbauposition aufweist, kann eine in ein Planetengetriebe integrierte Drehmomentmessvorrichtung leicht montiert und demontiert werden. Die integrierte Längenänderungs- bzw. Kraftmeßeinrichtung kann beispielsweise ein optisches, drucksensitives, Magnetostriktion- oder Dehnungsmeßstreifen-basiertes Meßsystem sein.

Die vorliegende Erfindung wird nachfolgend an einem Ausführungsbeispiel anhand der Zeichnung näher erläutert. Es zeigt
- Figur 1: eine schematische Darstellung eines Planetengetriebes,

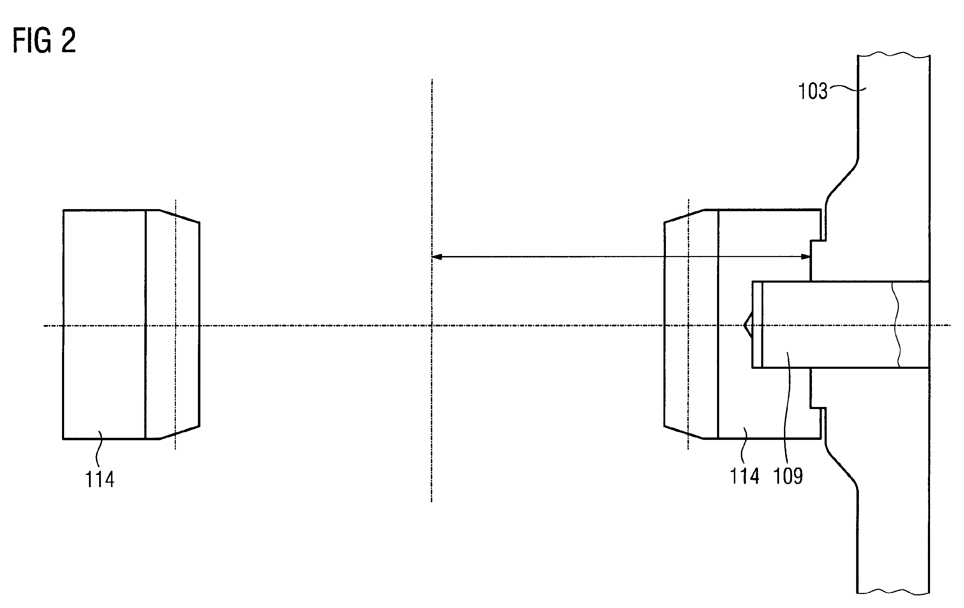

- Figur 2: eine Anordnung mit einem Gehäuse und einem mittels eines Befestigungsbolzens am Gehäuse montierten Hohlrad,
- Figur 3: eine erste Variante eines Befestigungsbolzens mit integrierter Sensoreinheit in Seitenansicht,
- Figur 4: den Befestigungsbolzen gemäß Figur 3 im Querschnitt,
- Figur 5: eine zweite Variante eines Befestigungsbolzens mit integrierter Sensoreinheit im Längsschnitt,
- Figur 6: den Befestigungsbolzen gemäß Figur 5 im Querschnitt,
- Figur 7: eine dritte Variante eines Befestigungsbolzens mit integrierter Sensoreinheit im Längsschnitt,
- Figur 8: den Befestigungsbolzen gemäß Figur 7 im Querschnitt,
- Figur 9: eine vierte Variante eines Befestigungsbolzens mit integrierter Sensoreinheit im Längsschnitt.

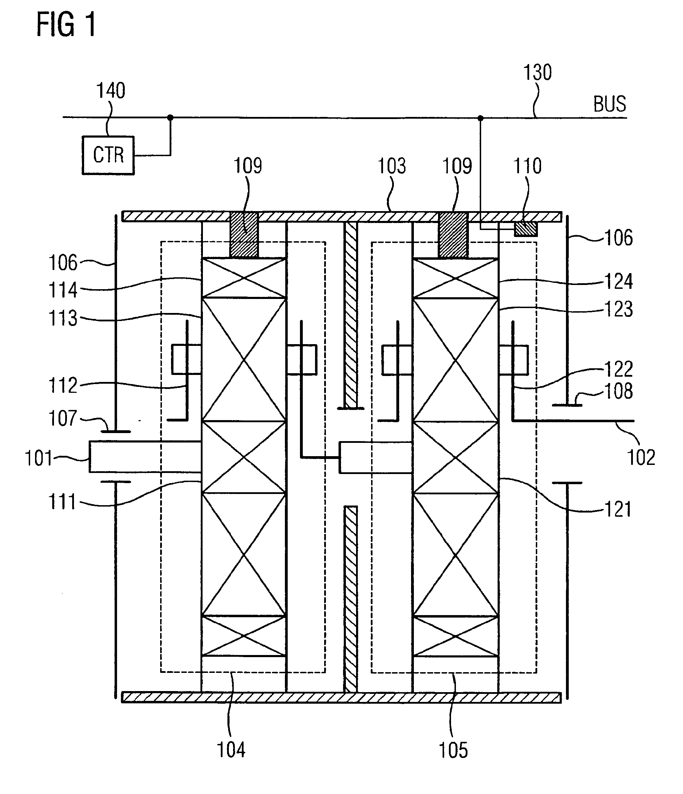

Das in Figur 1 beispielhaft dargestellte Getriebe umfaßt eine Antriebs- 101 und eine Abtriebswelle 102, die in einem Getriebegehäuse 103 gelagert sind. Die Antriebswelle 101 ist mit einem Sonnenrad 111 einer ersten Planetenstufe 104 verbunden, während die Abtriebswelle 102 mit einem mehrere Planetenräder 123 umfassen Planetenträger 122 einer zweiten Planetenstufe 105 verbunden ist. Das Getriebegehäuse 103 ist stirnseitig jeweils durch einen Gehäusedeckel 106 verschlossen. Die Gehäusedeckel 106 weisen Aufnahmen bzw. Führungselemente für Lager 107, 108 der Antriebs- 101 und Abtriebswelle 102 auf.

Die erste Planetenstufe 104 umfaßt außerdem einen Planetenträger 112, der mehrere mit einem feststehenden Hohlrad 114 kämmende Planetenräder 113 aufnimmt und mit einem Sonnenrad 121 der zweiten Planetenstufe 105 verbunden ist. Die zweite Planetenstufe 105 weist ebenfalls ein feststehendes Hohlrad 124 auf, das mit den Planetenrädern 123 der zweiten Planetenstufe 105 kämmt. Zumindest eines der Hohlräder 114, 124 ist durch mindestens einen Befestigungsbolzen 109 am Getriebegehäuse 103 montiert, der einen integrierten Drehmomentsensor umfaßt. Der Drehmomentsensor basiert auf einer Längenänderungs- bzw. Kraftmeßeinrichtung und ist mit einer Auswerteeinrichtung 110 elektrisch verbunden. Die Auswerteeinrichtung 110 dient insbesondere zur Erfassung einer Getriebeüberlastung. Zusätzlich könnte auch ein Drehmomentsensor im Bereich des Lager 107, 108 der Antrieb- oder Abtriebswelle 101, 102 vorgesehen sein.

Die Auswerteeinrichtung 110 umfaßt eine Speichereinheit zur Aufzeichnung eines Getriebebelastungsverlaufs. Den Getriebebelastungsverlauf repräsentierende Drehmoment- oder Kraftmeßwerte werden in der Speichereinheit als Lastkollektive gespeichert. Die Lastkollektive geben dabei einen zeitlichen Anteil eines Meßwerts oder Meßwertebereichs während eines Getriebebetriebs wieder. Darüber hinaus weist die Auswerteeinrichtung 110 eine Bus-Schnittstelle auf und ist über ein BusSystem 130 entsprechend einer vorteilhaften Ausführungsform mit einer Regelungs- oder Steuerungseinrichtung 140 eines das Getriebe antreibenden Motors oder eines vom Getriebe angetriebenen Generators verbunden.

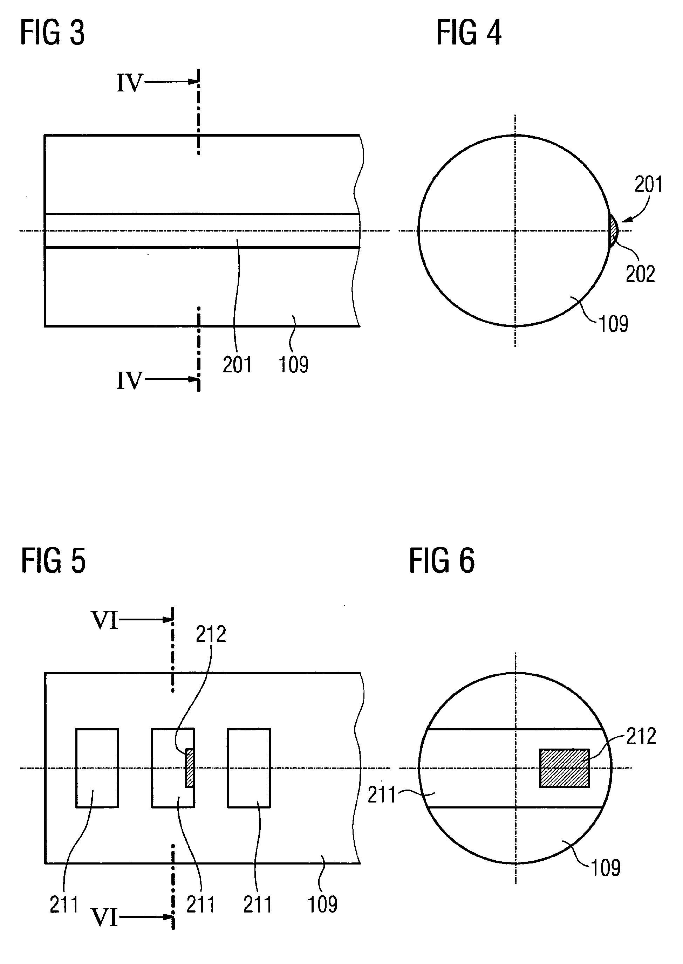

Bei dem in den Figuren 3 und 4 dargestellten Ausführungsbeispiel umfaßt der Befestigungsbolzen 109 einen piezoelektrischen Kraftsensor 202, der an einer sich axial entlang des Befestigungsbolzens 109 erstreckenden Abflachung 201 am Befestigungsbolzen 109 montiert ist. Alternativ hierzu kann der Befestigungsbolzen 109 entsprechend den Figuren 5 und 6 mehrere senkrecht zu seiner Längsachse angeordnete Ausnehmungen 211 aufweisen. In zumindest einer dieser Ausnehmungen 211 ist ein kapazitiver Wegsensor oder ein Sensor mit Dehnungsmeßstreifen 212 angeordnet.

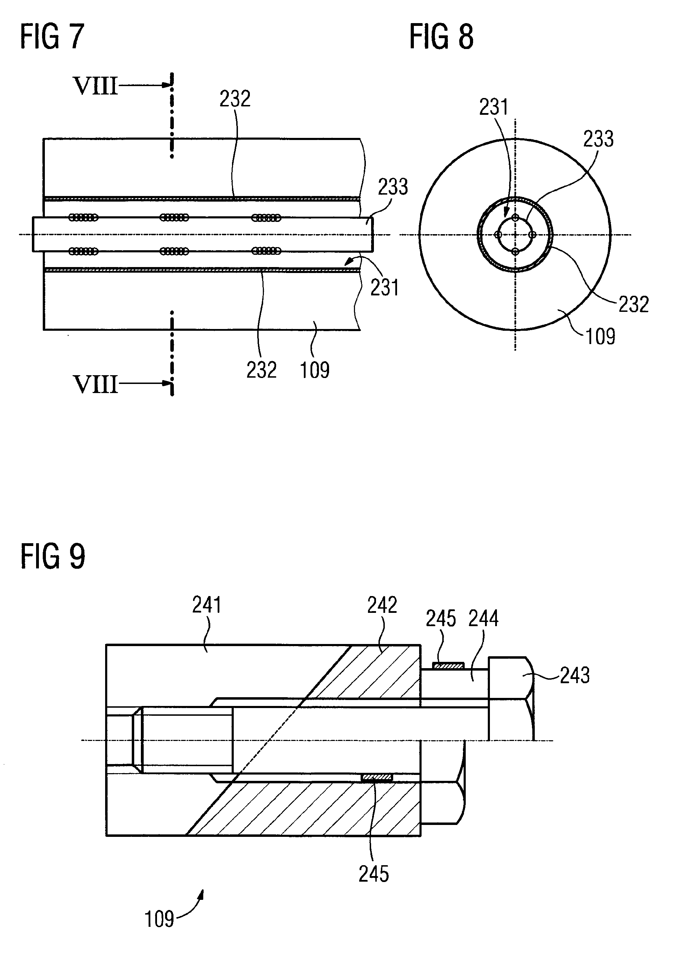

In den Figuren 7 und 8 ist eine weitere Variante eines Befestigungsbolzens 109 dargestellt, bei welcher der Befestigungsbolzen 109 eine Längsbohrung 231 mit einer magnetisierten Innenwand 232 und eine in der Längsbohrung 231 angeordnete Spulenanordnung 233 umfaßt. Mittels der Spulenanordnung 233 kann eine drehmomentabhängige Biegung des Befestigungsbolzens 109 im Bereich der magnetisierten Innenwand 232 erfaßt werden.

Der in Figur 9 dargestellte Befestigungsbolzen 109 umfaßt ein erstes Bolzenelement 241 und ein zweites Bolzenelement 242, die mittels einer in eine Längsbohrung des Befestigungsbolzens 109 montierten Schraube 243 miteinander verbunden sind. Dabei weist das erste Bolzenelement 241 ein Schraubengewinde auf. Zwischen dem zweiten Bolzenelement 242 und einem Kopf der Schraube 243 ist eine Hülse 244 montiert. Im vorliegenden Ausführungsbeispiel ist sowohl außen an der Hülse 244 als auch an der Schraube 243 in einem Bereich des zweiten Bolzenelements 242 jeweils Sensor mit Dehnungsmeßstreifen 245 angeordnet. Mit einem solchen Sensor kann eine drehmomentabhängige Biegung des Befestigungsbolzens 109 erfaßt werden.

Die Anwendung der vorliegenden Erfindung ist nicht auf die vorliegenden Ausführungsbeispiele beschränkt.

## Patentansprüche

1. Planetengetriebe für eine Windkraftanlage oder industrielle Anwendungen mit
- einem Sonnenrad (111, 121), einem Hohlrad (114, 124) und mehreren Planetenrädern (113, 123), die in einem Planetenträger (112, 122) gelagert sind und sowohl mit dem Sonnenrad (111, 121) als auch mit dem Hohlrad (114, 124) in Eingriff stehen,
- einem das Sonnenrad (111, 121), das Hohlrad (114, 124) und die Planetenräder (113, 123) umfassenden Getriebegehäuse (103),
- wobei das Hohlrad (114, 124) mittels zumindest eines Befestigungsbolzens (109) am Getriebegehäuse (103) montiert ist, und wobei der zumindest eine Befestigungsbolzen (109) eine integrierte Längenänderungs- und/oder Kraftmesseinrichtung umfasst,
**dadurch gekennzeichnet, dass** der Befestigungsbolzen (109) so angeordnet ist, dass ein auf das Hohlrad (114,124) einwirkendes Drehmoment eine auf den Befestigungsbolzen (109) einwirkende Scherkraft hervorruft.

2. Planetengetriebe nach Anspruch 1,
bei dem der Befestigungsbolzen (109) einen piezoelektrischen Kraftsensor (202) umfaßt.

3. Planetengetriebe nach Anspruch 2,
bei dem der piezoelektrische Kraftsensor (202) an einer sich axial entlang des Befestigungsbolzens (109) erstreckenden Abflachung (201) am Befestigungsbolzen (109) montiert ist.

4. Planetengetriebe nach Anspruch 1,
bei dem der Befestigungsbolzen (109) zumindest eine senkrecht zu seiner Längsachse angeordnete Ausnehmung (211) aufweist, in der ein kapazitiver Wegsensor oder ein Sensor mit Dehnungsmessstreifen (212) angeordnet ist.

5. Planetengetriebe nach Anspruch 1,
bei dem der Befestigungsbolzen (109) eine Längsbohrung (231) mit einer magnetisierter Innenwand (232) und eine in der Längsbohrung (231) angeordnete Spulenanordnung (233) umfasst.

6. Planetengetriebe nach Anspruch 1,
bei dem der Befestigungsbolzen (109) ein erstes Bolzenelement (241) und ein zweites Bolzenelement (242) umfasst, die mittels einer in eine Längsbohrung des Befestigungsbolzens (109) montierten Schraube (243) miteinander verbunden sind, und bei dem das erste Bolzenelement (241) ein Schraubengewinde aufweist, und bei dem zwischen dem zweiten Bolzenelement (242) und einem Kopf der Schraube (243) eine Hülse (244) montiert ist, und bei dem außen an der Hülse (244) und/oder an der Schraube (243) in einem Bereich des zweiten Bolzenelements (242) ein sensor mit Dehnungsmessstreifen (245) angeordnet ist.

7. Planetengetriebe nach Anspruch 1,
bei dem die integrierte Längenänderungs- und/oder Kraftmesseinrichtung ein optisches, drucksensitives, Magnetostriktion- oder Dehnungsmeßstreifen-basiertes Meßsystem ist.

## Claims

1. Planetary transmission for a wind power plant or industrial applications, having
- a sun wheel (111, 121), an annulus (114, 124) and a plurality of planet wheels (113, 123), which are supported in a planet carrier (112, 122) and are in engagement both with the sun wheel (111, 121) and with the annulus (114, 124),
- a transmission case (103) surrounding the sun wheel (111, 121), the annulus (114, 124) and the planet wheels (113, 123),
- wherein the annulus (114, 124) is mounted on the transmission case (103) by means of at least one fastening bolt (109), and wherein the at least one fastening bolt (109) includes an integrated length-change and/or force-measuring device, **characterized in that** the fastening bolt (109) is arranged such that a torque acting on the annulus (114, 124) generates a shear force acting on the fastening bolt (109).

2. Planetary transmission according to Claim 1,
in which the fastening bolt (109) includes a piezoelectric force sensor (202).

3. Planetary transmission according to Claim 2,
in which the piezoelectric force sensor (202) is mounted on a flat (201) on the fastening bolt (109), said flat extending axially along the fastening bolt (109).

4. Planetary transmission according to Claim 1,
in which the fastening bolt (109) has at least one recess (211) arranged perpendicularly to the longitudinal axis thereof, in which a capacitive displacement sensor or a sensor having strain gages (212) is arranged.

5. Planetary transmission according to Claim 1,
in which the fastening bolt (109) includes a longitudinal hole (231) having a magnetized internal wall (232) and a coil arrangement (233) arranged in the longitudinal hole (231).

6. Planetary transmission according to Claim 1,
in which the fastening bolt (109) comprises a first bolt element (241) and a second bolt element (242), which are connected to one another by means of a screw (243) mounted in a longitudinal hole in the fastening bolt (109), and in which the first bolt element (241) has a screw thread, and in which a sleeve (244) is mounted between the second bolt element (242) and a head of the screw (243), and in which a sensor having strain gages (245) is arranged on the outside of the sleeve (244) and/or on the outside of the screw (243) in a region of the second bolt element (242).

7. Planetary transmission according to Claim 1,
in which the integrated length-change and/or force-measuring device is an optical, pressure-sensitive, magnetostriction- or strain-gage-based measuring system.

## Revendications

1. Engrenage épicycloïdal pour une éolienne ou pour des applications industrielles, comprenant
- une roue (111, 121) solaire, une roue ( 114, 124 ) à denture intérieure et plusieurs pignons ( 113, 123 ), qui sont montés dans une cage ( 112, 122 ) et qui sont en prise à la fois avec la roue ( 111, 121 ) solaire et avec la roue ( 114, 124 ) à denture intérieure,
- un carter ( 103 ) d'engrenage entourant la roue ( 111, 121 ) solaire, la roue ( 114, 124 ) à denture intérieure et les pignons ( 113, 123 ),
- dans lequel la roue ( 114, 124 ) à denture intérieure est montée sur le carter ( 103 ) d'engrenage au moyen d'au moins un axe ( 109 ) de fixation et dans lequel le au moins un axe ( 109 ) de fixation comprend un dispositif intégré de mesure de variations de longueur et/ou de force,
**caractérisé en ce que** l'axe ( 109 ) de fixation est disposé, de manière à ce qu'un couple de rotation agissant sur la roue ( 114, 124 ) à denture intérieure provoque une force de cisaillement agissant sur l'axe ( 109 ) de fixation.

2. Engrenage épicycloïdal suivant la revendication 1,
dans lequel l'axe ( 109 ) de fixation comprend un capteur ( 202 ) piézoélectrique de force.

3. Engrenage épicycloïdal suivant la revendication 2,
dans lequel le capteur ( 202 ) piézoélectrique de force est monté sur l'axe ( 109 ) de fixation sur un méplat ( 201 ) s'étendant axialement le long de l'axe ( 109 ) de fixation.

4. Engrenage épicycloïdal suivant la revendication 1,
dans lequel l'axe ( 109 ) de fixation a au moins un évidement ( 211 ), qui est disposé perpendiculaire à son axe longitudinal, et dans lequel est disposé un capteur capacitif de trajet ou un capteur de jauge ( 212 ) de contrainte.

5. Engrenage épicycloïdal suivant la revendication 1,
dans lequel l'axe ( 109 ) de fixation comprend un trou ( 231 ) longitudinal ayant une paroi ( 232 ) intérieure magnétisée et un agencement ( 233 ) de bobine disposé dans le trou ( 231 ) longitudinal.

6. Engrenage épicycloïdal suivant la revendication 1,
dans lequel l'axe ( 109 ) de fixation comprend un premier élément ( 241 ) d'axe et un deuxième élément ( 242 ) d'axe, qui sont assemblés entre eux au moyen d'une vis ( 243 ) montée dans un trou longitudinal de l'axe ( 109 ) de fixation, et dans lequel le premier élément ( 241 ) d'axe a un filet de vis et dans lequel une douille ( 244 ) est montée entre le deuxième élément ( 242 ) d'axe et une tête de la vis ( 243 ) et dans lequel un capteur ayant une jauge ( 245 ) de contrainte est montée à l'extérieur sur la douille ( 244 ) et/ou sur la vis ( 243 ) dans une région du deuxième élément ( 242 ) d'axe.

7. Engrenage épicycloïdal suivant la revendication 1,
dans lequel le dispositif intégré de mesure de variations de longueur et/ou de force est un système de mesure optique, sensible à la pression, à base d'une magnétostriction ou d'une jauge de contrainte.
